# EUROPEAN PATENT APPLICATION

(11) **EP 3 318 452 A1**
(43) Date of publication of application: **09.05.2018**
(21) Application number: 16382516.9
(22) Date of filing: 07.11.2016
(51) Int. Cl.: B60S 1/52

(54) **FLUID-EJECTION DEVICE**

(71) Applicant: FICO TRANSPAR, S.A., 08028 Barcelona (ES)
(72) Inventor: Lopez Galera, Robert, 08232 VILADECAVALLS (ES); Mota López, Miguel, 08232 VILADECAVALLS (ES); Esteller Pitarch, Carles, 08232 VILADECAVALLS (ES); Espinosa Morales, Jose Manuel, 08232 VILADECAVALLS (ES); Alcaide Hernández, Olallo, 08232 VILADECAVALLS (ES)
(74) Representative: ZBM Patents - Zea, Barlocci & Markvardsen

(57) **Abstract**

The fluid-ejection device (100) comprises a first member (110) and a second member (120). The second member (120) is movable relative to the first member (110) and has an outlet (125) from which fluid can be discharged. The first member (110) has a first inlet (200) adapted to be fed by fluid from a source of fluid (250), and is connected to the outlet (125), and a second inlet (300) adapted to be fed by fluid from a source of fluid (250) that is capable of driving the second member (120) so as to move it relative to the first member (110).

## Description

### Fluid-ejection device

The present disclosure relates to devices for discharging a fluid into surfaces of parts, for example, for washing, cleaning, drying, lubricating, etc. surfaces, or one or more portions of surfaces, of parts of motor vehicles and many other applications.

### BACKGROUND

In the automotive field, washing devices are known intended for washing surfaces of parts such as for example headlights, lenses, sensors, etc. Many different variants have been devised so far in order to properly reach and wash complex surfaces, with objects interposed in the path of the fluid that is ejected into the surface to be washed, etc. Examples of such variants are devices including orientable nozzles and devices including telescopic nozzles.

EP1564095 discloses a device where a cleaning liquid is fed such that a number of separate flows are discharged a through radial slit or holes in a sprayer body.

Documents EP1694541, EP1506109 and FR3021014 refer to the above telescopic nozzle variants. They generally comprise a hollow cylinder and a piston arranged to slide inside the hollow cylinder against a spring as it is driven by a cleaning liquid that is fed therewithin. The cleaning liquid is discharged out of the washing device through a nozzle that is connected to the piston when the piston is completely telescoped.

Despite the efforts in the prior art, known washing devices remain ineffective and undesirably complex, so there is still a need for efficient fluid-ejection devices to be used for washing surfaces of parts in motor vehicles and other applications while they are simple in structure as well as cost effective in manufacturing. In addition, as the fluid is discharged through the nozzle, some of the pressure has to be also used for driving the telescopic piston. As a result, an overpressure is applied to the piston such that the piston and the source of pressurized fluid have to be oversized, thus adding costs.

### SUMMARY

The objective of the present fluid-ejection device is to at least reduce the above disadvantages while providing a number of significant advantages. This fluid-ejection device is intended for washing, cleaning, drying, lubricating, etc. one or more surfaces, or one or more parts thereof, in motor vehicle parts such as headlamps, vehicle bodywork, bumpers, number plates, sensor covers, camera lenses, camera covers, etc. in motor vehicles. Other applications other than in the automotive field are also possible.

As used herein, the term washing must be interpreted in the widest sense, so it may for example include cleaning operations (such as to remove dirt), drying operations (such as to remove washing fluid), etc. Other operations such as lubricating (such as to discharge a lubricating fluid), may be included.

The present fluid-ejection device comprises a first member that is provided with a first inlet and a second inlet. Such first and second inlets are adapted to feed respective fluids from corresponding source of fluids. Said respective fluids are allowed to flow through corresponding fluidic circuits.

A second member is also provided in the present fluid-ejection device. Such second member is movable relative to the first member in a telescopic manner so as to effectively reach the entire surface to be washed. The second member is provided with an outlet from which the fluid can be discharged out of the device. The first inlet is in fluid communication with the outlet.

The first inlet of the first member is connected to said outlet of the second member. The fluid fed through the second inlet is suitable to drive the second member so as to move it relative to the first member. If required, the second inlet could be configured to discharge fluid out of the device through the above mentioned outlet in the second member.

Within the most general configuration of the present fluid-ejection device having at least two inlets in a first member and at least one outlet in a second member, a case where said first and second inlets are formed in a lower portion of the first member is preferred. This advantageously allows fluids to immediately act for driving the second member and to be discharged, respectively, as they are fed into the device.

As stated above, the first inlet and the second inlet are suitably adapted to be fed by fluid from a source of fluid. In some examples, the first inlet and the second inlet may be adapted to be fed by fluids from the same source of fluid. However, the first inlet and second inlet might be adapted, if required, to be fed by fluids from different sources of fluid. In the latter case, said different sources of fluid could be adapted to supply different fluids having the same or different characteristics where necessary.

It may be preferred that the second member is configured with a head provided with a nozzle where said outlet is formed. The nozzle may be of the orientable type, that is, with the above mentioned outlet of the second member capable of being rotated to supply the fluid fed through the first inlet and to discharge it out of the device into any desired surface even if it is difficult to reach. However, the second inlet could be configured to discharge fluid out of the device.

In some cases, the outlet, that is the nozzle, in the second member could be adapted to discharge a single stream of at least one fluid from the first inlet and the second inlet. In other cases, however, the outlet could be adapted to discharge different streams of at least one fluid from the first inlet and the second inlet, as required.

The present device may further include a return mechanism. Such return mechanism would be suitably adapted to return the second member back to an position where it is retracted relative to the first member.

If provided, the return mechanism may for example comprise a spring, such as a compression spring, arranged to oppose the movement of the second member relative to the first member. Other suitable mechanical means could be alternatively used to return the second member back to said retracted position.

The above mentioned sources of fluid may be adapted to supply fluid, such as a cleaning or washing liquid, a washing gas, a combination of washing liquids, a combination of washing gases, a combination of washing liquid or liquids and gas or gases, etc. Other fluids and combinations of fluids are also possible. The fluid from the above mentioned sources of fluid can be supplied simultaneously to both the first and second inlets in the first member such that the fluid is allowed to be discharged out of the second member during its movement relative to the first member. A sweeping effect can be thus achieved. Sealing means may also be arranged between the first member and the second member to ensure tightness. It may be preferred that the sealing means are located in a lower part of the second member.

Based on the above disclosure, one preferred example is a small-size telescopic fluid-ejection device where two fluids are involved: a first fluid is supplied into the first inlet intended to be discharged for performing a washing operation, and a second fluid is supplied into the second inlet for driving the second member. As stated above, said first fluid and second fluid may be the same or different types of fluids. During discharge, the second fluid could be ejected or not through the outlet of the second member depending on requirements.

Additional objects, advantages and features of examples of the present fluid-ejection device will become apparent to those skilled in the art upon examination of the description, or may be learned by practice thereof.

### BRIEF DESCRIPTION OF THE DRAWINGS

Particular embodiments of the present fluid-ejection device will be described in the following by way of non-limiting examples, with reference to the appended drawings, in which:
Figure 1 is a top plan view of an example of the present fluid-ejection device;
Figure 2 is a sectional view taken along line BB in figure 1 of the fluid-ejection device in a retracted position;
Figure 3 is a sectional view taken along line AA in figure 1 of the fluid-ejection device in the retracted position;
Figure 4 is a sectional view taken along line BB in figure 1 of the fluid-ejection device in an extended position;
Figure 5 is a sectional view taken along line BB in figure 1 of another example of the fluid-ejection device in the extended position;
Figure 6 is a sectional view taken along line AA in figure 1 of the fluid-ejection device in the extended position;
Figure 7 is a sectional view taken along line AA in figure 1 corresponding to a further example a the fluid-ejection device in the retracted position;
Figure 8 is a sectional view taken along line AA in figure 1 corresponding to the further example of the fluid-ejection device in the extended position;
Figure 9 is a sectional view taken along line AA in figure 1 corresponding to an additional example a the fluid-ejection device in the retracted position; and
Figure 10 is a sectional view taken along line AA in figure 1 corresponding to the additional example of the fluid-ejection device in the extended position.

### DETAILED DESCRIPTION OF EXAMPLES

The non-limiting example shown in the figures corresponds to a small-size telescopic fluid-ejection device 100 for washing a motor vehicle part. Other applications are of course possible.

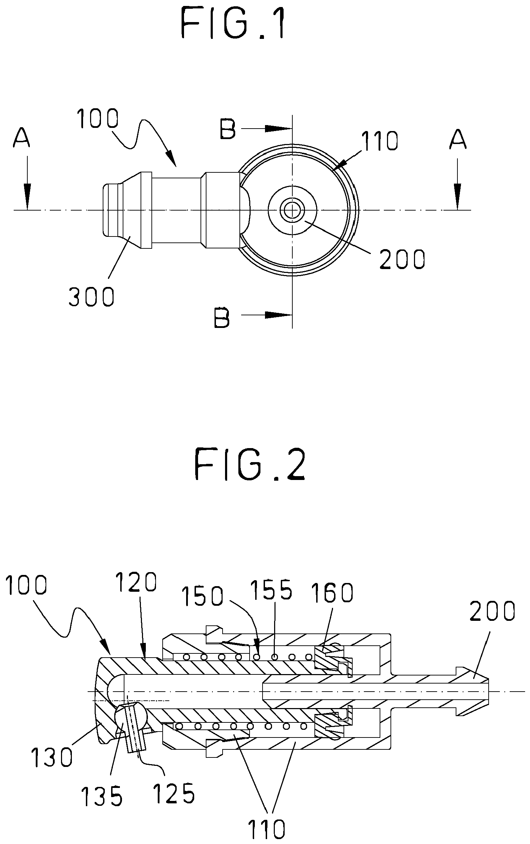

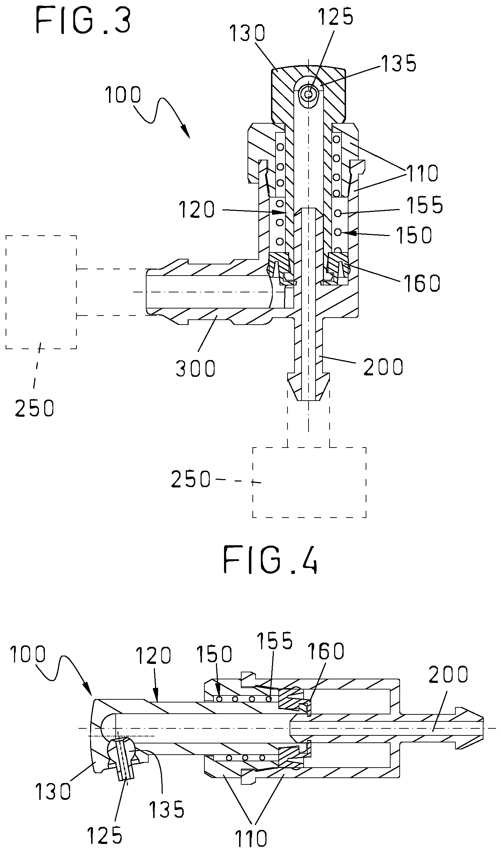

In the example shown in the figures, the fluid-ejection device 100 has been illustrated in two different positions, namely retracted and extended positions. Figures 2, 3 and 7, 9 show the fluid-ejection device 100 in the retracted position. Figures 4-6, 8 and 10 show the fluid-ejection device 100 in the extended position. Other intermediate positions of the fluid-ejection device 100 are also possible.

The fluid-ejection device 100 shown in figures of the drawings comprises a first member 110 and a second member 120. Said first and second members 110, 120 are mounted to each other in a telescopic manner. Specifically, the first member 110 is fixed, for example, attached to a fixed portion that could for example be a portion of an assembly attached to the part to be washed, and the second member 120 is movable relative to the first member 110, i.e., it is mounted such that it can be displaced along the first member 110.

The first member 110 is provided with a first inlet 200 and a second inlet 300. Said first and second inlets 200, 300 are associated with different fluidic circuits where respective first and second fluids are allowed to flow when fed from respective first and second sources of fluid 250. Although two different sources of fluid 250 are illustrated in figure 3, a single common source of fluid 250 could be used adapted to supply fluid to both first and second inlets 200, 300.

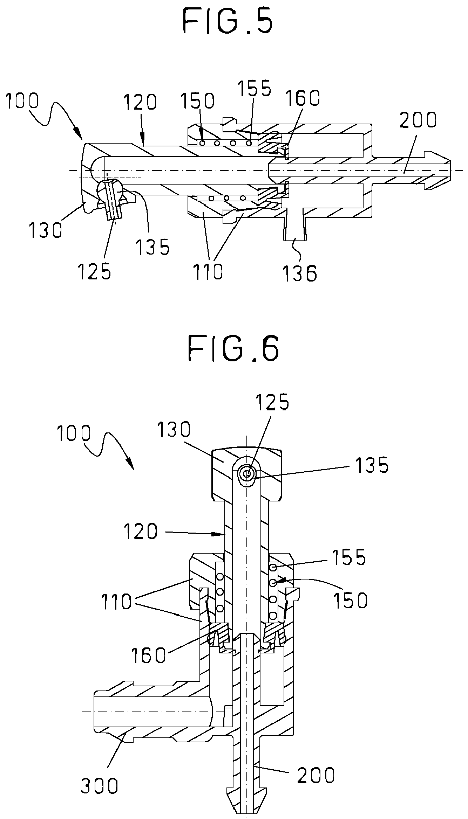

The second member 120 is provided with a head 130. The head 130 is configured to have an orientable nozzle 135. An outlet 125 is provided in the nozzle 135 for the discharge of fluid into a surface of a part to be washed. For this purpose, the first inlet 200 is in fluid communication with the outlet 125 and adapted to be fed by the first fluid from the first source of fluid 250, defining a first fluidic circuit. Said nozzle 135 can be configured to discharge the first fluid according to a single stream or according to different streams as required. In the variant shown in figure 5, an additional outlet 136 is provided. The additional outlet 136 can be configured to act as a nozzle or, in general, to be a part extending from the fluidic circuit. The additional outlet 136 is formed in the first member 110 for discharging the second fluid from the second source of fluid 250. In this example, the orientable nozzle 135 is a separate piece, which may be preferred for standardization purposes. However, in other examples the head 130 could be devoid of the orientable nozzle 135 and be provided only with the outlet 125.

The fluid-ejection device 100 shown in the example of the figures is thus provided with two inlets 200, 300 and one outlet 125. However, examples of the fluid-ejection device 100 provided with more than two inlets 200, 300 and more than one outlet 125 are also possible. Between the first member 110 and the second member 120 are also sealing means 160 comprising an O-ring, a lip seal, and the like. The sealing means 160 is located in a lower part of the second member 120 as it can be seen in the figures. The sealing means 160 are designed to withstand the force applied by the second fluid to drive the second member 120 relative to the first member 100.

The second inlet 300 of the first member 110 is adapted to be fed by the second fluid from the second source of fluid 250. The second fluid is used for driving the second member 120 relative to the first member 110. Thus, as the second fluid is fed from the second source of fluid 250 through the second inlet 300, the second member 120 is caused to move relative to the first member 110. As a result, the device 110 is suitably telescoped such that the entire surface of the part to be washed can be reached by the first fluid that is being discharged.

As shown in figures, both the first inlet and the second inlet are formed in a lower portion of the first member 110. As a result, the first and second fluids act immediately as they enter the device 100 through the respective inlets 200, 300.

In the example shown, the first fluid is air and the second fluid is a cleaning or washing liquid from the motor vehicle windscreen washer system. However, the first fluid and/or the second fluid may be any other fluid such as a washing gas, a combination of washing gases and/or liquids, etc. The first fluid and the second fluid could be of the same of similar type or characteristics as required. The use of air as the first fluid may be preferred so that there is thus no need for highly compressing the fluid so as to overcome the force required to drive the second member 120 for discharging the first fluid with sufficient pressure for a proper washing operation.

The first fluid and the second fluid can be both supplied from the sources of fluid 250 simultaneously to both the first and second inlets 200, 300 into the second member 120. Thus, the first fluid is allowed to be discharged out through the nozzle 135 during movement of the second member 120 by the second fluid causing a sweeping effect for the washing operation.

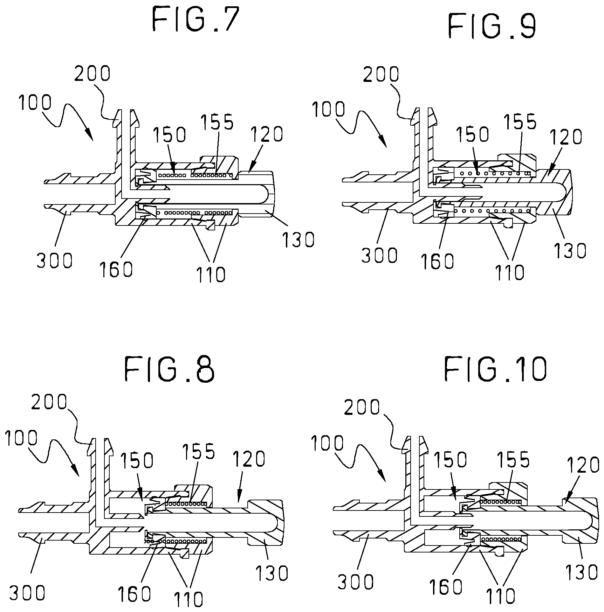

In the particular examples shown in figures 7-10 the fluids from the sources of fluid 250 are mixed inside the fluid-ejection device 100 when they fed inside the device 100 to be discharged both through the same nozzle 135. In the example in figures 7, 8, the second member 120 is out of an inside portion of the second inlet 300 when the second member 120 is in the extended position, as shown in figure 8. In the additional example of figures 9, 10, the second member 120 is arranged still surrounding the inside portion of the second inlet 300 when the second member 120 is in the extended position, as shown in figure 10. Both examples allow mixing of first fluid and second fluid to be varied as required. Flow rates of fluid can be precisely controlled by adjusting the way the second member 120 interacts with the inside portion of the second inlet 300 in the extended position.

As shown in figures, a return mechanism 150 is provided comprising a compression spring 155. The compression spring 155 is arranged between the first member 110 and the second member 120. The compression spring 155 acts to oppose the movement of the second member 120 and thus, to return the second member 120 from the extended position, back to an initial, retracted position. Return to the second member 120 to the retracted position may occur when supply of the second fluid is stopped.

Although only a number of particular embodiments and examples of the present fluid-ejection device have been disclosed herein, it will be understood by those skilled in the art that other alternative examples and/or uses and obvious modifications and equivalents thereof are possible. For example, the second inlet could be configured to discharge second fluid out of the device through the outlet of the nozzle in the second member. In addition, although two end positions (retracted and extended positions) of the second member are shown in figures, a number of intermediate positions for the discharge of fluid out of the fluid-ejection device 100 are also possible. The present disclosure thus covers all possible combinations of the particular examples described. The scope of the present disclosure should not be limited by particular examples, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A fluid-ejection device (100) comprising:
a first member (110) and a second member (120),
the second member (120) movable relative to the first member (110) and having an outlet (125) from which fluid can be discharged out, wherein
the first member (110) has a first inlet (200) and a second inlet (300),
the first inlet (200) is adapted to be fed by fluid from a source of fluid (250), and is connected to the outlet (125),
the second inlet (300) is adapted to be fed by fluid from a source of fluid (250),
and the fluid through the second inlet (300) is suitable for driving the second member (120) so as to move it relative to the first member (110).

2. The device (100) of claim 1, wherein the first and second inlets (200, 300) are formed in a lower portion of the first member (110).

3. The device (100) of claim 1 or claim 2, wherein the first and second inlets (200, 300) are adapted to be fed by fluid from the same source of fluid (250).

4. The device (100) of claim 1 or claim 2, wherein the first and second inlets (200, 300) are adapted to be fed by fluid from different sources of fluid (250).

5. The device (100) of claim 4, wherein the different sources of fluid (250) are adapted to supply different fluids having different characteristics.

6. The device (100) of any of the preceding claims, wherein the second member (120) is provided by a head (130) having a nozzle (135) where said outlet (125) is formed.

7. The device (100) of any of the preceding claims, wherein the second inlet (300) is configured to discharge fluid out of the device (1).

8. The device (100) of claim 7, wherein the outlet (125) is adapted to discharge a single stream of fluids from the first inlet (200) and the second inlet (300).

9. The device (100) of claim 7 of claim 8, wherein the outlet (125) is adapted to discharge different streams of fluids from the first inlet (200) and the second inlet (300).

10. The device (100) of any of the claims 7 to 9, wherein the second inlet (300) is configured to discharge fluid out of the device (1) through the outlet (125) in the second member (120).

11. The device (100) of any of the preceding claims, wherein it further includes a return mechanism (150) to return the second member (120) back to a retracted position.

12. The device (100) of claim 11, wherein the return mechanism (150) comprises a spring (155) arranged to oppose the movement of the second member (120) relative to the first member (110).

13. The device (100) of any of the claims 4-12, wherein said sources of fluid (250) are adapted to supply fluid simultaneously to both the first and second inlets (200, 300) such that the second member (120) is allowed to discharge fluid during its movement relative to the first member (110).

14. The device (100) of any of the preceding claims, wherein it further comprises sealing means (160) arranged between the first member (110) and the second member (120).

15. The device (100) of claim 14, wherein the sealing means (160) are located in a lower part of the second member (120).
